# EUROPEAN PATENT SPECIFICATION

(11) **EP 2 717 627 B1**
(45) Date of publication and mention of the grant of the patent: **06.09.2017**
(21) Application number: 12789497.0
(22) Date of filing: 25.05.2012
(51) Int. Cl.: H04W 36/30, H04W 76/04, H04W 88/06, H04W 36/00, H04W 36/16

(54) **METHOD FOR SIMULTANEOUS HANDOVER IN A WIRELESS ACCESS SYSTEM THAT SUPPORTS DEVICE-TO-DEVICE COMMUNICATION AND APPARATUS FOR SUPPORTING THE METHOD**
VERFAHREN FÜR GLEICHZEITIGES HANDOVER IN EINEM DRAHTLOSEN ZUGANGSSYSTEM MIT UNTERSTÜTZUNG EINER GERÄT-ZU-GERÄT-KOMMUNIKATION UND VORRICHTUNG ZUR UNTERSTÜTZUNG DIESES VERFAHRENS
PROCÉDÉ POUR UN TRANSFERT INTERCELLULAIRE SIMULTANÉ DANS UN SYSTÈME D'ACCÈS SANS FIL QUI PREND EN CHARGE UNE COMMUNICATION DE DISPOSITIF À DISPOSITIF ET APPAREIL ASSOCIÉ

(30) Priority: 25.05.2011 US 201161489689 P
(43) Date of publication of application: 09.04.2014
(73) Proprietor: LG Electronics Inc., Yeongdeungpo-gu Seoul 150-721 (KR)
(72) Inventor: JANG, Jiwoong, Anyang-si Gyeonggi-do 431-080 (KR); CHO, Hangyu, Anyang-si Gyeonggi-do 431-080 (KR); KIM, Dongcheol, Anyang-si Gyeonggi-do 431-080 (KR)
(74) Representative: Cabinet Plasseraud
(86) International application number: PCT/KR2012/004160
(87) International publication number: WO 2012/161549

(56) References cited:
- WO-A1-2005/053346
- WO-A2-2009/064105
- WO-A2-2010/093647
- KR-A- 20090 004 185
- KR-A- 20090 005 601
- KR-B1- 100 777 112
- LIWEN CHU(STMICROELECTRONICS): "Avoid frame reordering and recover active state ; 11-07-2791-01-000z-avoid-frame-reordering- and-recover-active-state", IEEE DRAFT; 11-07-2791-01-000Z-AVOID-FRAME-REORDERING- AND-RECOVER-ACTIVE-STATE, IEEE-SA MENTOR, PISCATAWAY, NJ USA, vol. 802.11z, no. 1, 15 November 2007 (2007-11-15), pages 1-12, XP017682556, [retrieved on 2007-11-15]

## Description

### Technical Field

The present invention relates to a wireless access system supporting Device to Device (D2D) communication, and more particularly, to a method for enabling seamless communication between devices, a method for switching communication to a cellular network, and an apparatus supporting the same. More particularly, the present invention relates to a method for performing simultaneous handover to another cell by devices that are conducting D2D communication with each other.

### Background

Hereinbelow, a D2D communication environment will be described in brief.

As is implied by its appellation, D2D means communication between electronic devices. In a broad sense, D2D means wired or wireless communication between electronic devices or communication between a man-controlled device and a machine. Recently, D2D typically refers to wireless communication between electronic devices without human intervention.

In the early 1990s when D2D communication was introduced, it was regarded as the concept of remote control or telematics and its market was very limited. However, D2D communication has witnessed fast growth in recent years and the D2D communication market has been boosted so much as to attract much interest around the world. Particularly, D2D communication has significantly affected the fields of fleet management in Point Of Sales (POS) systems and security-related application markets, remote monitoring of machines and facilities, and smart metering of measuring the operation time of a construction machine and automatically measuring heat use or electricity use. D2D communication will find various applications in conjunction with legacy mobile communication, ultra-fast wireless Internet, or a low-output communication solution such as Wireless Fidelity (Wi-Fi) and ZigBee and will extend to a Business-to-Consumer (B2C) market beyond a Business-to-Business (B2B) market.

In the era of D2D communication, every machine equipped with a Subscriber Identity Module (SIM) card can be managed and controlled remotely because it can transmit and receive data. For example, the D2D communication technology may be used in a wide range of devices and equipment including a vehicle, a train, a container, an automatic vending machine, a gas tank, etc.

Previously, terminals are managed individually and thus a Base Station (BS) communicates one-to-one with a terminal. If a large number of D2D devices communicate one-to-one with a BS, signaling between each D2D device and the BS may bring about network overhead. As D2D communication is widespread due to its rapidly increasing popularity as described above, communication overhead between D2D devices or communication overhead between D2D devices and a BS may cause problems.

Conventionally, research efforts were expended mainly on D2D direct communication. A method for enabling seamless communication in the case of a poor D2D connection state or a method for switching from D2D communication to D2D-cellular network communication (i.e. handover or routing) is yet to be developed.
The document WO 2009/064105 discloses a procedure for selecting the best path from among a direct link setup, DLS, path and an access point, AP, path.
The document WO 2005/053346 discloses a method to be executed by a User Equipment in P2P communication mode to perform cell handover.
The document WO 2010/093647 discloses a network management node to manage a network of base stations and wireless transmit/receive units that operate using diverse radio access technologies.

### Disclosure

### Technical Problem

Aspects of the present disclosure are provided to address at least the above-mentioned problems and/or disadvantages and to provide at least the advantages described below. Accordingly, an aspect of the present invention is to provide an efficient communication method for a Device-to-Device (D2D) device.

Another aspect of the present disclosure devised is to provide a method for enabling seamless data transmission in spite of degradation of D2D link quality during D2D direct communication.

Another aspect of the present disclosure devised is to provide a method for performing handover (or routing) to cellular network communication in the case of degradation of D2D link quality during D2D direct communication.

Another aspect of the present disclosure devised is to provide a method for performing handover to the same target cell in a handover situation by devices participating in D2D direct communication.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

To achieve the objects, a method according to claim 1, a method according to claim 3 and a device according to claim 5 are provided. Other embodiments are described in dependent claims 2 and 4.

### [Advantageous Effects]

According to the embodiments of the present disclosure the following effects are achieved.

Firstly, D2D devices can communicate with each other efficiently by adaptive handover between D2D communication and cellular communication.

Secondly, D2D devices can transmit and receive data seamlessly in spite of degradation of D2D link quality during D2D direct communication.

Thirdly, if D2D link quality is degraded during D2D direct communication, D2D devices can transmit and receive data seamlessly by performing handover (or routing) to cellular network communication.

Fourthly, if one of D2D devices is placed in a handover situation during D2D direct communication, the other D2D device performs simultaneous handover to the same target cell, thereby conducting efficient D2D direct communication.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### Brief Description of the Drawings

The accompanying drawings, which are included to provide a further understanding of the disclosure and are incorporated in and constitute a part of this application, illustrate embodiments of the invention and together with the description serve to explain the principle of the invention. In the drawings:
Fig. 1 illustrates one of Device-to-Device (D2D) direct communication methods;
Fig. 2 is a block diagram of a D2D device and a Base Station (BS) according to an embodiment of the present disclosure;
Fig. 3 illustrates a method for performing handover to a cellular network according to an embodiment of the present disclosure;
Fig. 4 illustrates a method for performing handover to a cellular network according to another embodiment of the present disclosure;
Fig. 5 illustrates a method for performing handover to a cellular network according to another embodiment of the present disclosure;
Fig. 6 illustrates a method for performing handover to a cellular network according to another embodiment of the present disclosure;
Fig. 7 illustrates a method for performing handover to a cellular network according to another embodiment of the present disclosure;
Fig. 8 illustrates a method for performing handover to a cellular network according to another embodiment of the present disclosure;
Fig. 9 illustrates an exemplary simultaneous handover operation according to an embodiment of the present disclosure;
Fig. 10 illustrates an exemplary simultaneous handover operation according to another embodiment of the present disclosure;
Fig. 11 illustrates an exemplary simultaneous handover operation according to another embodiment of the present disclosure; and
Fig. 12 illustrates an exemplary simultaneous handover operation according to another embodiment of the present disclosure.

### Best Mode for Carrying Out the methods and apparatuses of the present disclosure

A detailed description will be given below of a method for enabling seamless communication between Device-to-Device (D2D) devices in a wireless access system supporting a D2D environment, a method for switching communication to a cellular network, methods for performing simultaneous handover to another cell by D2D devices, and apparatuses supporting the methods according to embodiments of the present disclosure.

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the attached drawings, a detailed description of known procedures or steps of the present disclosure will be avoided lest it should obscure the subject matter of the present disclosure. In addition, procedures or steps that could be understood to those skilled in the art will not be described either.

In the embodiments of the present disclosure, a description is mainly made of a data transmission and reception relationship between a Base Station (BS) and a User Equipment (UE). A BS refers to a terminal node of a network, which directly communicates with a UE. A specific operation described as being performed by the BS may be performed by an upper node of the BS.

Namely, it is apparent that, in a network comprised of a plurality of network nodes including a BS, various operations performed for communication with a UE may be performed by the BS, or network nodes other than the BS. The term 'BS' may be replaced with a fixed station, a Node B, an evolved Node B (eNode B or eNB), an Advanced Base Station (ABS), an access point, etc.

In the embodiments of the present disclosure, a D2D device refers to a terminal that performs D2D communication. A D2D device may be called a 'device' shortly. The term D2D device may be replaced with a UE, a Mobile Station (MS), a Subscriber Station (SS), a Mobile Subscriber Station (MSS), a mobile terminal, a terminal, a device, a Machine-to-Machine (M2M) device, etc.

A transmitter is a fixed and/or mobile node that provides a data service or a voice service and a receiver is a fixed and/or mobile node that receives a data service or a voice service. Therefore, a UE may serve as a transmitter and a BS may serve as a receiver, on an UpLink (UL). Likewise, the UE may serve as a receiver and the BS may serve as a transmitter, on a DownLink (DL).

The embodiments of the present disclosure may be supported by standard specifications disclosed for at least one of wireless access systems including an Institute of Electrical and Electronics Engineers (IEEE) 802.xx system, a 3^{rd} Generation Partnership Project (3GPP) system, a 3GPP Long Term Evolution (LTE) system, and a 3GPP2 system. The steps or parts, which are not described to clearly reveal the technical idea of the present disclosure, disclosure in the embodiments of the present disclosure may be explained by the above standard specifications.

Further, all terms disclosed in the disclosure may be explained by the above standard specifications. Particularly, the embodiments of the present disclosure may be supported by one or more of 3GPP LTE/LTE-A specifications.

Reference will now be made in detail to the preferred embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

Embodiments of the present disclosure will be described in detail so that those skilled in the art may readily implement the present disclosure. However, the present disclosure can be implemented in different manners, not limited to the embodiments described herein. Parts that are not related to a description of the present disclosure are omitted in the drawings and like reference numerals denote the same components through the disclosure.

Throughout the disclosure, if it is said that some part "includes" a component, this means that the part may further include other components, not excluding other components, unless otherwise specified. The terms "module", "part", and "unit" are used to signify a unit that processes at least one function or operation, which may be realized in hardware, software, or a combination of both.

The following detailed description includes specific terms in order to provide a thorough understanding of the present disclosure. However, it will be apparent to those skilled in the art that the specific terms may be replaced with other terms without departing from the scope of the present claims.

For example, a serving cell is a cell including a BS that is currently servicing D2D devices and a target cell is a cell to which the D2D devices will perform handover. In embodiments of the present disclosure, a common cell is defined as a target cell to which the D2D devices perform handover together in the event of a simultaneous handover situation.

### 1. Communication between D2D Devices

In embodiments of the present disclosure, D2D communication means (1) communication between terminals via a BS (e.g. controlled D2D communication), (2) communication between a BS and a terminal, or (3) communication between D2D devices (e.g. uncontrolled D2D communication), which is conducted without human intervention. Accordingly, a D2D device is a terminal that may support such D2D communication.

An Access Service Network (ASN) for a D2D service is called a D2D ASN and a network entity communicating with D2D devices is called a D2D server. The D2D server executes a D2D application and provides a D2D-specific service for one or more D2D devices. A D2D feature is a characteristic of a D2D application and one or more features may be required to provide a D2D application. A D2D device group refers to a group of D2D devices sharing one or more common features.

As the number of their machine application types increases, the number of devices communicating by D2D (i.e. D2D devices, D2D communication devices, Machine Type Communication (MTC) devices, etc.) will increase gradually in a certain network.

The machine application types include (1) security, (2) public safety, (3) tracking and tracing, (4) payment, (5) health care, (6) remote maintenance and control, (7) metering, (8) consumer device, (9) fleet management in POS systems and a security-related application market, (10) D2D communication between vending machines, (11) smart meter involving remote monitoring of machines and facilities and automatic measurement of heat consumption or electricity consumption, (12) surveillance video communication of a surveillance camera, etc. However, the machine application types are not limited to these specific types and many other machine application types are available.

Another feature of a D2D device is low mobility or almost no movement after installation. This implies that the D2D device is stationary for a very long time. A D2D communication system may simplify or optimize mobility-related operations for a specific stationary D2D application such as secured access and surveillance, public safety, payment, remote maintenance and control, metering, etc.

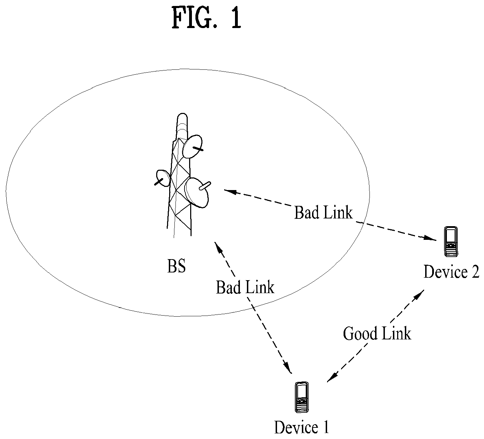

Fig. 1 illustrates one of D2D direct communication methods.

One of main objects of D2D direct communication is to save power/resources relative to communication via a BS by establishing a direct link between D2D devices near to each other or between D2D devices in a good direct link channel state and thus conducting direct communication between the D2D devices. Especially for D2D devices apart from each other by a short distance (e.g. a first device (Device 1) and a second device (Device 2)) at a cell edge as illustrated in FIG. 1, the effect of saving resources/power brought by D2D direct communication is very remarkable.

For example, if each of D2D devices is connected to a BS (i.e. a controlled D2D situation), the D2D devices should occupy UL and DL resources. Therefore, given two D2D devices, four radio resources in total are occupied. On the other hand, setup of a link between the D2D devices is sufficient for D2D direct communication and thus two radio resources are occupied. Accordingly, D2D direct communication may save more resources/power than communication through a cellular network. While two D2D devices are conducting D2D direct communication in Fig. 1, more D2D devices may be involved in D2D direct communication.

### 2. D2D Device

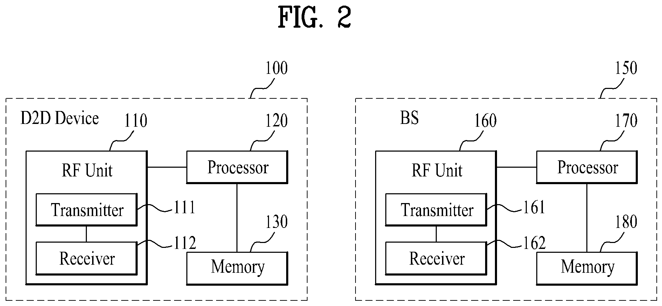

Fig. 2 is a block diagram of a D2D device and a BS according to an embodiment of the present disclosure.

Referring to Fig. 2, each of a D2D device 100 and a BS 150 may include a Radio Frequency (RF) unit 110 or 160, a processor 120 or 170, and a memory 130 or 180 which is optional. While one D2D device and one BS are shown in Fig. 2, a D2D communication environment may be built between a plurality of D2D devices and a BS.

Each of the RF units 110 and 160 may include a transmitter 111 or 161 and a receiver 112 or 162. In the D2D device 100, the transmitter 111 and the receiver 112 may be configured so as to transmit a signal to and receive a signal from the BS 150 and other D2D devices. The processor 120 may be configured so as to control the transmitter 111 and the receiver 112 to transmit and receive signals to and from other devices, while being connected to the transmitter 111 and the receiver 112 functionally. In addition, the processor 120 may process a transmission signal and then transmit the processed signal to the transmitter 111, and may process a signal received at the receiver 112.

When needed, the processor 120 may store information included in an exchanged message in the memory 130. The D2D device 100 having the above configuration may perform methods according to various embodiments of the present disclosure, as described later.

While not shown in Fig. 2, the D2D device 100 may include various additional components according to its machine application type. For example, if the D2D device 100 is designed for smart meter, the D2D device 100 may include an additional component for power measurement. The power measurement may be controlled by the processor 120 illustrated in Fig. 2 or a separately configured controller (not shown).

While Fig. 2 illustrates an example of communication between the D2D device 100 and the BS 150, a D2D communication method according to the present disclosure may be performed between one or more D2D devices and each device may perform later-described methods according to various embodiments of the present disclosure, with the configuration illustrated in Fig. 2.

In the BS 150, the transmitter 161 and the receiver 162 are configured so as to transmit and receive signals to and from another BS, a D2D server, and D2D devices. The processor 170 may be configured so as to control the transmitter 161 and the receiver 162 to transmit and receive signals to and from other devices, while being connected to the transmitter 161 and the receiver 162 functionally. In addition, the processor 170 may process a transmission signal and then transmit the processed signal to the transmitter 161, and may process a signal received at the receiver 162. When needed, the processor 160 may store information included in an exchanged message in the memory 180. The BS 150 having the above configuration may perform methods according to various embodiments of the present disclosure, as described later.

The processors 120 and 170 of the D2D device 110 and the BS 150 instruct (e.g. command, adjust, manage, etc.) operations of the D2D device 110 and the BS 150, respectively. The processors 120 and 170 may be connected respectively to the memories 130 and 180 that store program codes and data. The memories 130 and 180 are connected to the processors 120 and 170 and store an Operating System (OS), an application, and general files.

The processors 120 and 170 of the present disclosure may be called controllers, microcomputers, etc. The processors 120 and 170 may be realized by various means, for example, hardware, firmware, software, or a combination of them. In a hardware configuration, the processors 120 and 170 may include Application Specific Integrated Circuits (ASICs), Digital Signal Processors (DSPs), Digital Signal Processing Devices (DSPDs), Programmable Logic Devices (PLDs), Field Programmable Gate Arrays (FPGAs), etc. which are configured to implement the present disclosure.

In a firmware or software configuration, the embodiments of the present disclosure may be implemented in the form of a module, a procedure, a function, etc. performing functions or operations according to the present disclosure. Firmware or software configured to implement the present disclosure may be included in the processors 120 and 170 or may be stored in the memories 130 and 180 and executed by the processors 120 and 170.

### 3. Handover Method

If a power gain or resource gain brought by D2D direct communication is not achieved due to degradation of the channel quality between D2D devices during D2D direct communication (see Fig. 1), there is no reason for maintaining the D2D direct communication any longer.

Even though the degraded link quality leads to disconnection of a D2D direct communication link, data transmission should be seamless between the D2D devices. Therefore, there exists a need for switching data transmission to a cellular network in a situation where no gain is achieved from D2D direct communication or a D2D direct communication link is disconnected.

Proposals described below are applicable to both controlled D2D communication and uncontrolled D2D communication. In the former, a BS or a central device of an existing cellular network controls resource allocation or the like, unless otherwise constrained, whereas in the latter, any existing cellular network does not control D2D communication. However, if restriction to controlled D2D communication or uncontrolled D2D communication is clarified, the proposals are limited to controlled D2D communication or uncontrolled D2D communication.

Hereinbelow, situations triggering handover conditions during D2D communication will be described. That is, conditions for switching communication of a D2D device involved in D2D direct communication to a cellular network will be described.

### (1) Conditions of Handover to Cellular Network

1) If Negative ACKnowledgments (NACKs) are consecutively generated during D2D communication, a D2D device may switch its data transmission from D2D direct communication to cellular network communication.
   Generation of consecutive NACKs is a sufficient basis on which it is determined that the channel state is not suitable for data transmission. In this case, to increase channel quality, the D2D device should increase transmission power or use additional radio resources. However, this action eliminates the gain of D2D direct communication.
   Accordingly, in the event of consecutive NACKs, the D2D device preferably switches its communication scheme from D2D direct communication to cellular network communication. The number of NACKs for switching to a cellular network is preferably 2 or 3.
2) Upon generation of consecutive time-outs, the D2D device may switch its data transmission from D2D direct communication to cellular network communication.
   If a time-out occurs, this means that the D2D device or the other party does not even recognize reception or non-reception of data. For example, there is no response to a transmitted control message. That is, channel quality in the event of time-out may be determined to be poorer than channel quality in the event of consecutive NACKs.
   As is done in the case of successive NACKs, the D2D device should raise transmission power or use additional radio resources, resulting in no gain of D2D direct communication. Therefore, if time-outs occur successively, it is preferred to switch the communication scheme of the D2D device from D2D direct communication to cellular network communication. The number of consecutive time-outs for switching a communication scheme may be 1, 2, or 3.
3) If the Frame Error Rate (FER) or Bit Error Rate (BER) of received data is equal to or lower than a threshold, the D2D device switches from D2D direct communication to cellular network communication.
4) If at least one of D2D devices participating in D2D direct communication moves to another cell, the D2D device may switch its data transmission from D2D direct communication to cellular network communication.
   If the D2D devices conducting D2D direct communication are located in different cells, each D2D device should use UL and DL resources in its cell. Especially, to maintain D2D direct communication, the D2D devices should use the same resources. The big constraint on resource use decreases resource efficiency that D2D direct communication boasts of.
   For this reason, if at least one D2D device moves to another cell during D2D direct communication, the D2D device may switch from D2D direct communication to cellular network communication.
   One thing to note herein is that if two D2D devices move to the same cell at the same time or at a short interval between them, the D2D devices may be allocated resources configured for D2D direct communication and may continue D2D direct communication in the allocated resources in the new cell, without switching to cellular network communication.
5) If the transmission power of at least one of D2D devices conducting D2D direct communication rises to or above a predetermined threshold, the D2D device may switch its communication scheme to cellular network communication.
   The threshold may be a value at which a transmission power gain may be achieved from D2D direct communication, compared to cellular network communication, or the value plus or minus an offset.
6) If the Modulation and Coding Scheme (MCS) level of at least one of D2D devices conducting D2D direct communication is decreased to or below a predetermined value, the D2D device may switch its communication scheme to cellular network communication.
7) If D2D devices conducting D2D direct communication get farther from each other by a predetermined distance or larger, a D2D device may switch its communication scheme to cellular network communication.
   In this case, the BS may command switching of the communication scheme to the D2D device, rather than the D2D device requests communication switching to the BS.
8) If a channel quality measured from a pilot signal or a reference signal is decreased to or below a predetermined value, a D2D device may switch its communication scheme to cellular network communication.
9) A D2D device may adopt a communication scheme that offers a link with a better channel quality.
   In controlled D2D communication, for example, a D2D device may receive a pilot signal or a reference signal periodically from a BS or a network entity equivalent to the BS and estimate channel quality from the received pilot signal or reference signal. The D2D device may compare the channel quality of a D2D link between D2D devices with the channel quality between the D2D device and the BS. If the latter is better than the former, the D2D device may switch its communication scheme to cellular network communication.
10) If insufficient radio resources are available to a D2D device conducting D2D direct communication, the D2D device may switch its communication scheme from D2D direct communication to cellular network communication.
   For example, it may occur that radio resources allocated to a D2D device are not available any longer in controlled D2D communication. If insufficient radio resources are available to the D2D device, a BS may control the D2D device to switch from D2D communication to cellular network communication.
11) If two or more of the handover conditions 1) to 10) occur simultaneously, a BS and/or a D2D device may switch the communication scheme of the D2D device from D2D direct communication to cellular network communication.

Under the above handover conditions, D2D devices switch from D2D direct communication to cellular network communication. The communication switching may be regarded as handover or routing. A description will be given of various methods for performing handover from D2D direct communication to a cellular network, if any of the above-described conditions occurs.

### (2) Methods for Performing Handover to Cellular Network by D2D Device

Methods for switching a communication scheme from D2D direct communication to cellular network communication according to embodiments of the present disclosure will be described. Any of D2D devices may sense a condition triggering handover from D2D communication to cellular network communication. However, in embodiments of the present disclosure, it is assumed for the convenience of description that the first D2D device (i.e. Device 1) senses and recognizes a condition for handover to a cellular network. In addition, a D2D device is shortly called a 'device', for the convenience of description in the following embodiments of the present disclosure.

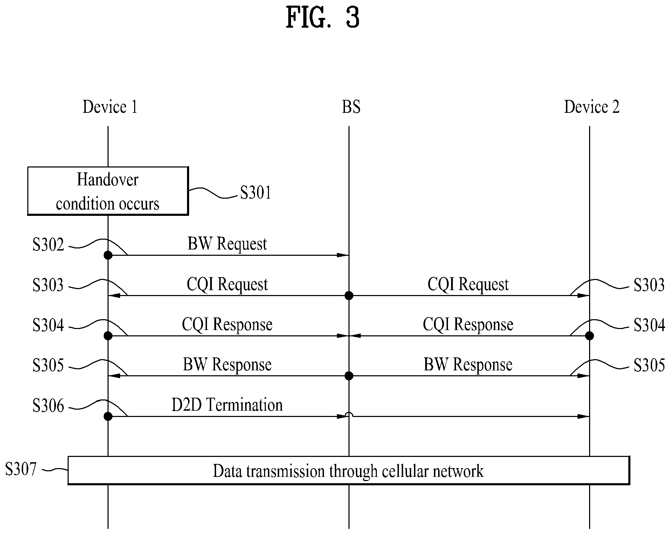

Fig. 3 illustrates a method for performing handover to a cellular network according to an embodiment of the present disclosure.

Referring to Fig. 3, Device 1 recognizes a condition for handover to a cellular network (S301).

Subsequently, Device 1 transmits a BandWidth (BR) request message to a BS, requesting a bandwidth (S302).

Upon receipt of the BW request message, the BS transmits a Channel Quality Information (CQI) request message requesting CQI in regards to radio resources (e.g. a channel, a link, etc.) allocated to D2D direct communication to Device 1 and Device 2 that are communicating with each other by D2D direct communication (S303).

Upon receipt of the CQI request message, Device 1 and Device 2 measure CQI in regards to the radio resources for D2D direct communication and transmit CQI response messages including the measured CQI to the BS (S304).

Upon receipt the CQI response messages, the BS allocates appropriate bandwidths to Device 1 and Device 2 based on the CQI included in the CQI response messages and transmits BW response messages including information about the allocated bandwidths to Device 1 and Device 2 (S305).

Then Device 1 transmits a message indicating termination of the ongoing D2D direct communication to the BS and Device 2. After receiving the message indicating termination of the D2D direct communication, the BS releases the radio resources allocated to each D2D device (S306).

Device 1 and Device 2 may transmit and receive data to and from each other in the bandwidths allocated by the BS through the BS over a cellular network (S307).

The D2D devices may perform handover (or routing) from D2D direct communication to the cellular network communication by the above operation. Accordingly, the D2D devices may transmit and receive data seamlessly even after the handover to the cellular network, as in the D2D direct communication.

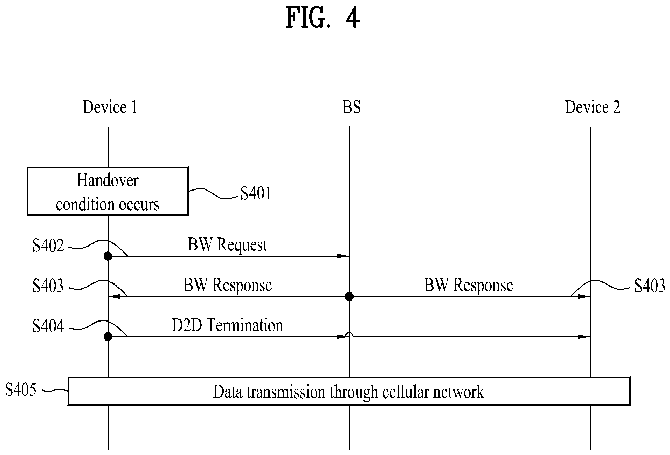

Fig. 4 illustrates a method for performing handover to a cellular network according to another embodiment of the present disclosure.

Typically, a BS allocates and controls radio resources of a cell to each terminal. That is, it may be assumed that the BS has already checked a resource state of its cell in a controlled D2D communication environment. In this case, steps S303 and S304 of Fig. 3 may be meaningless. Therefore, the BS may not request CQI to the D2D devices and may not receive CQI responses from the D2D devices.

Referring to Fig. 4, Device 1 recognizes the afore-described condition for handover to a cellular network (S401).

Subsequently, Device 1 transmits a BW request message to a BS, requesting a bandwidth (S402).

The BS allocates appropriate bandwidths to Device 1 and Device 2 based on CQI of Device 1 and Device 2 and transmits BW response messages including information about the allocated bandwidths to Device 1 and Device 2 (S403).

Then Device 1 transmits a message indicating termination of the ongoing D2D direct communication to the BS and Device 2. After receiving the message indicating termination of the D2D direct communication, the BS releases radio resources allocated to each D2D device (S404).

Device 1 and Device 2 may transmit and receive data to and from each other in the bandwidths allocated by the BS through the BS over the cellular network (S405).

The D2D devices may perform handover (or routing) from D2D direct communication to cellular network communication by the above operation. Accordingly, the D2D devices may transmit and receive data seamlessly through the BS even after the handover to the cellular network, as in the D2D direct communication.

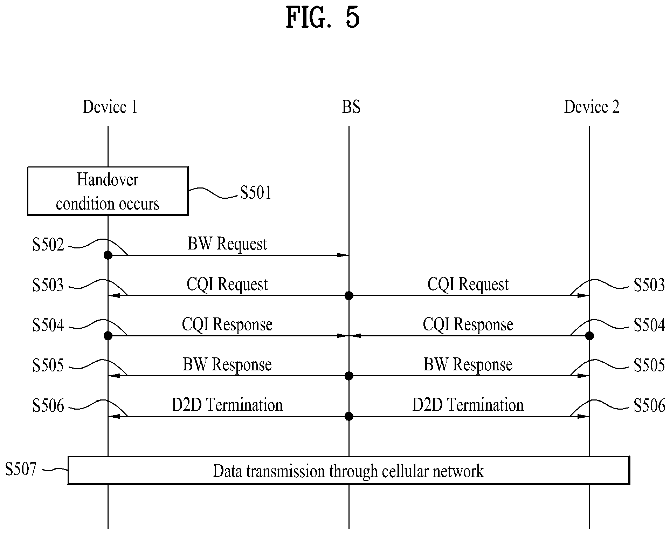

Fig. 5 illustrates a method for performing handover to a cellular network according to another embodiment of the present disclosure.

Referring to Fig. 5, Device 1 recognizes an afore-described condition for handover to a cellular network (S501).

Subsequently, Device 1 transmits a BW request message to a BS, requesting a bandwidth (S502).

Upon receipt of the BW request message, the BS transmits a CQI request message requesting CQI in regards to radio resources (e.g. a channel, a link, etc.) allocated to D2D direct communication to Device 1 and Device 2 that are communicating with each other by D2D direct communication (S503).

Upon receipt of the CQI request message, Device 1 and Device 2 measure CQI in regards to the radio resources for D2D direct communication and transmit CQI response messages including the measured CQI to the BS (S504).

Upon receipt the CQI response messages, the BS allocates appropriate bandwidths to Device 1 and Device 2 based on the CQI included in the CQI response messages and transmits BW response messages including information about the allocated bandwidths to Device 1 and Device 2 (S505).

One thing to note in Fig. 5 is that the BS transmits a message indicating termination of the ongoing D2D direct communication to Device 1 and Device 2. After transmitting the message indicating termination of the D2D direct communication, the BS immediately releases the radio resources allocated to each D2D device (S506).

Device 1 and Device 2 may transmit and receive data to and from each other in the bandwidths allocated by the BS through the BS over the cellular network (S507).

The D2D devices may perform handover (or routing) from D2D direct communication to the cellular network communication by the above operation. Accordingly, the D2D devices may transmit and receive data seamlessly through the BS even after the handover to the cellular network, as in the D2D direct communication.

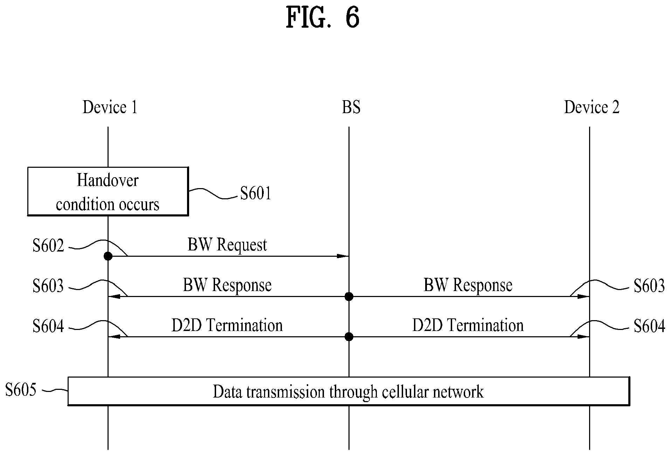

Fig. 6 illustrates a method for performing handover to a cellular network according to another embodiment of the present disclosure.

Typically, a BS allocates and controls radio resources of a cell to each terminal. That is, it may be assumed that the BS has already checked a resource state of its cell in a controlled D2D communication environment. In this case, steps S503 and S504 of Fig. 5 may be meaningless. Therefore, the BS may not request CQI to the D2D devices and may not receive CQI responses from the D2D devices.

Referring to Fig. 6, Device 1 recognizes an afore-described condition for handover to a cellular network (S601).

Subsequently, Device 1 transmits a BW request message to a BS, requesting a bandwidth (S602).

The BS allocates appropriate bandwidths to Device 1 and Device 2 based on CQI of Device 1 and Device 2 and transmits BW response messages including information about the allocated bandwidths to Device 1 and Device 2 (S603).

One thing to note in Fig. 6 is that the BS transmits a message indicating termination of the ongoing D2D direct communication to Device 1 and Device 2. After transmitting the message indicating termination of the D2D direct communication, the BS immediately releases the radio resources allocated to each D2D device (S604).

Device 1 and Device 2 may transmit and receive data to and from each other in the bandwidths allocated by the BS through the BS over the cellular network (S605).

The D2D devices may perform handover (or routing) from D2D direct communication to cellular network communication by the above operation. Accordingly, the D2D devices may transmit and receive data seamlessly through the BS even after the handover to the cellular network, as in the D2D direct communication.

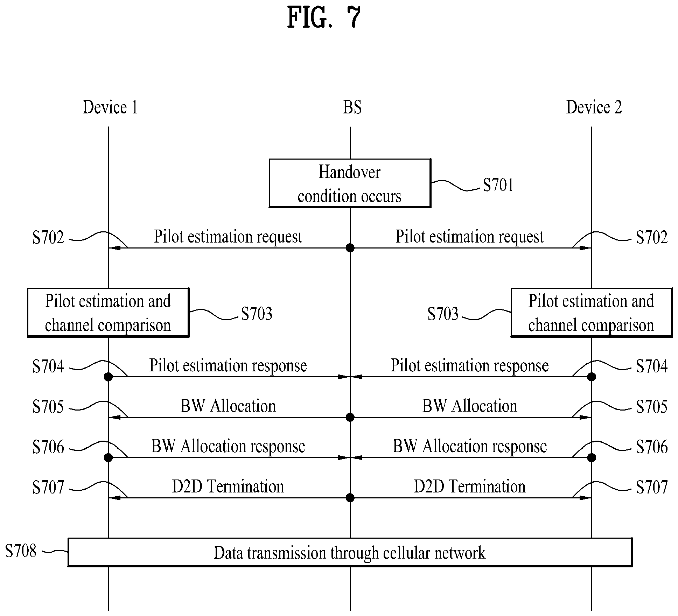

Fig. 7 illustrates a method for performing handover to a cellular network according to another embodiment of the present disclosure.

Compared to the handover methods illustrated in Figs. 3 to 6, a BS detects occurrence of a handover condition for handover to a cellular network (S701).

Upon detection of the handover condition, the BS transmits a pilot estimation request message to Device 1 and Device 2, requesting measurement of channel states between the BS and Device 1 and Device 2 (S702).

Device 1 and Device 2 detect a pilot signal or a reference signal received from the BS and perform channel estimation on the pilot signal or the reference signal, thus measuring cellular-network channel qualities between the BS and the devices. Then, Device 1 and Device 2 compare the channel qualities of radio channels for D2D direct communication respectively with the measured channel qualities (S703).

In addition, Device 1 and Device 2 transmit pilot estimation response messages including the channel quality comparison results to the BS (S704).

Meanwhile, Device 1 and Device 2 may measure channel qualities between the devices and the BS and transmit the CQI to the BS in step S704 without comparing the channel qualities in step S703.

The BS may allocate bandwidths to Device 1 and Device 2 based on the information included in the pilot estimation response messages. The BS transmits to Device 1 and Device 2 BW allocation messages including information about the bandwidths allocated to Device 1 and Device 2 (S705).

Device 1 and Device 2 transmit BW allocation response messages to the BS in response to the received BW allocation messages (S706).

Upon receipt of the BW allocation response messages, the BS transmits a message indicating termination of D2D direct communication to Device 1 and Device 2. After transmitting the message indicating termination of D2D direct communication, the BS may immediately release radio resources allocated to Device 1 and Device 2 (S707).

Device 1 and Device 2 may transmit and receive data to and from each other through the BS over the cellular network in the allocated bandwidths (S708).

The D2D devices may perform handover (or routing) from D2D direct communication to cellular network communication by the above operation. Accordingly, the D2D devices may transmit and receive data seamlessly through the BS even after the handover to the cellular network, as in the D2D direct communication.

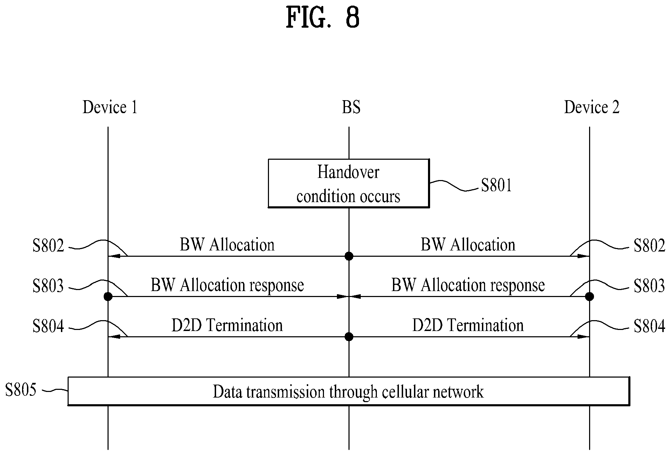

Fig. 8 illustrates a method for performing handover to a cellular network according to another embodiment of the present disclosure.

Typically, a BS allocates and controls radio resources of a cell to each terminal. That is, it may be assumed that the BS has already checked a resource state of its cell in a controlled D2D communication environment. In this case, steps S702, S703, and S704 of Fig. 7 may be meaningless. Therefore, the BS may not transmit and receive the pilot estimation request message and the pilot estimation response message to and from each D2D device.

Referring to Fig. 8, compared to the handover methods illustrated in Figs. 3 to 6, a BS detects occurrence of a handover condition for handover to a cellular network (S801).

Upon detection of occurrence of the handover condition, the BS may allocate bandwidths to Device 1 and Device 2 conducting D2D direct communication, for data transmission and reception over the cellular network. In addition, the BS may transmit to Device 1 and Device 2 BW allocation messages including information about the bandwidths allocated to Device 1 and Device 2 (S802).

Device 1 and Device 2 transmit BW allocation response messages to the BS in response to the received BW allocation messages (S803).

Upon receipt of the BW allocation response messages, the BS transmits a message indicating termination of D2D direct communication to Device 1 and Device 2. After transmitting the message indicating termination of D2D direct communication, the BS may immediately release radio resources allocated to Device 1 and Device 2 (S804).

Device 1 and Device 2 may transmit and receive data to and from each other through the BS over the cellular network in the allocated bandwidths (S805).

The D2D devices may perform handover (or routing) from D2D direct communication to cellular network communication by the above operation. Accordingly, the D2D devices may transmit and receive data seamlessly through the BS even after the handover to the cellular network, as in the D2D direct communication.

### (3) Methods for Simultaneous Handover of D2D Devices

The following embodiments of the present disclosure provide methods for conducting D2D direct communication efficiently, in which when a handover condition occurs to a device during D2D direct communication, the other device also performs handover together with the device even though the other device does not need to perform handover in terms of its state.

For example, if one of D2D devices is placed in a handover state (i.e. a handover situation) during D2D direct communication and the other D2D device is capable of performing handover together with the D2D device, it may be more efficient for the two D2D devices to continue D2D direct communication by performing handover to a target cell simultaneously.

In the following embodiments of the present disclosure, this handover method will be referred to as a simultaneous handover method. For the convenience of description, a D2D device placed in a handover situation will be referred to as Device 1 and a D2D device communicating with Device 1 by D2D direct communication will be referred to as Device 2.

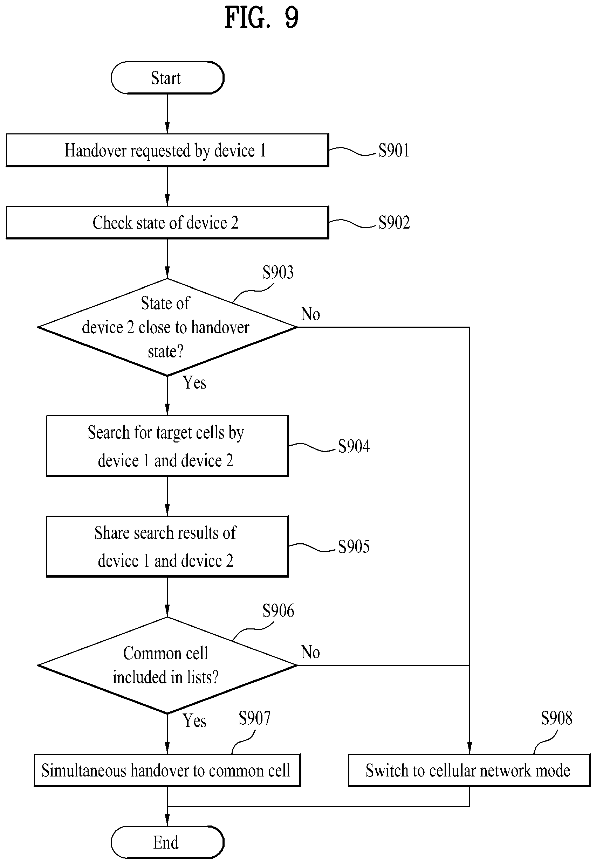

Fig. 9 illustrates an exemplary simultaneous handover operation according to an embodiment of the present disclosure.

Referring to Fig. 9, Device 1 may detect occurrence of a handover condition described before in Clause 3.(1) during D2D direct communication. Then Device 1 may transmit a handover request message requesting handover or a BW request message to a BS or Device 2 (S901).

Device 1 and/or the BS may determine the state of Device 2. For example, Device 1 and/or the BS may determine whether Device 2 is capable of performing handover, based on channel state information about Device 2 (S902).

Device 1 and/or the BS determines whether the state of Device 2 is close to a handover situation. The determination may be made based on the thresholds of the handover conditions described in Clause 3.(1) (S903).

If the state of Device 2 is close to the handover situation, each of Device 1 and Device 2 searches for a neighbor BS (i.e. a target cell) for handover (S904).

Then, Device 1 and Device 2 check their lists of detected target cells and exchange the lists with each other, thereby sharing information about the target cells. Device 1 and Device 2 may share the lists of the detected target cells (i.e. neighbor cells) with the BS by transmitting the lists to the BS (S905).

Device 1 and Device 2 determine whether there is a cell among the detected target cells to which they may perform handover simultaneously. In embodiments of the present disclosure, a target cell to which Device 1 and Device 2 will perform handover together will be referred to as a common cell (S906).

If a common cell is present in the target cell lists exchanged between Device 1 and Device 2, Device 1 and Device 2 perform handover to the common cell (S907).

In the absence of a common cell in the lists exchanged between Device 1 and Device 2 in step S906, Device 1 and Device 2 may discontinue D2D direct communication and perform handover to a cellular network in any of the manners described before with reference to Figs. 3 to 8 (S908).

On the other hand, if the state of Device 2 is not close to a handover situation in step S903, Device 1 and Device 2 may also discontinue D2D direct communication and perform handover to the cellular network in any of the manners described before with reference to Figs. 3 to 8 (S908).

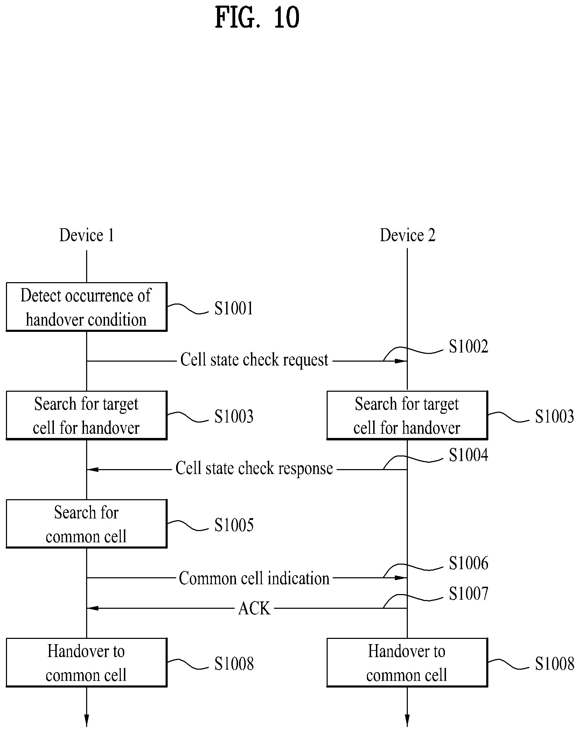

Fig. 10 illustrates an exemplary simultaneous handover operation according to another embodiment of the present disclosure.

Referring to Fig. 10, D2D devices may maintain a communication state with a BS of a serving cell during D2D direct communication in order to receive control information on a control channel from the BS. However, D2D devices may perform handover when a channel status with the serving cell degrades below a certain point. Herein, it is assumed that Device 1 detects occurrence of a handover condition described before in Clause 3.(1) (S1001).

Having been placed in the handover state, Device 1 transmits to Device 2 communicating with Device 1 by D2D direct communication a cell state check request message requesting Device 2 to check the current state of a control channel between the serving cell and Device 2 and to transmit information about the channel state (S1002)

Upon receipt of the cell state check request message, Device 2 measures the channel state with the serving cell and searches for target cells for handover (S1003).

Device 2 transmits a cell state check response message including information about detected target cells to Device 1. The information about the detected target cells may include a list of the target cells detected by Device 2 and channel state information (e.g. a channel estimate or a channel measurement) between Device 2 and the BS (S1004).

Device 1 may search for a common cell to which Device 1 will perform handover together with Device 2, based on the target cells detected in step S1003 and the target cell information included in the cell state check response message received from Device 2 (S 1005).

In the presence of a common cell, Device 1 transmits a common cell indication message including information about the common cell to Device 2. The common cell information may include a cell Identifier (ID) of the common cell (S1006).

Upon receipt of the common cell indication message, Device 2 may transmit a response message to Device 1 (S1007).

Upon receipt of an Acknowledgement (ACK) message, Device 1 may perform handover to the common cell together with Device 2 (S1008).

If there is no common cell in the target cell list included in the cell state check response message, to which Device 1 and Device 2 will perform handover simultaneously or if Device 2 is not placed in a handover state, Device 1 and Device 2 may perform handover to a cellular network in any of the manners illustrated in Figs. 3 to 8 instead of simultaneous handover in Fig. 10.

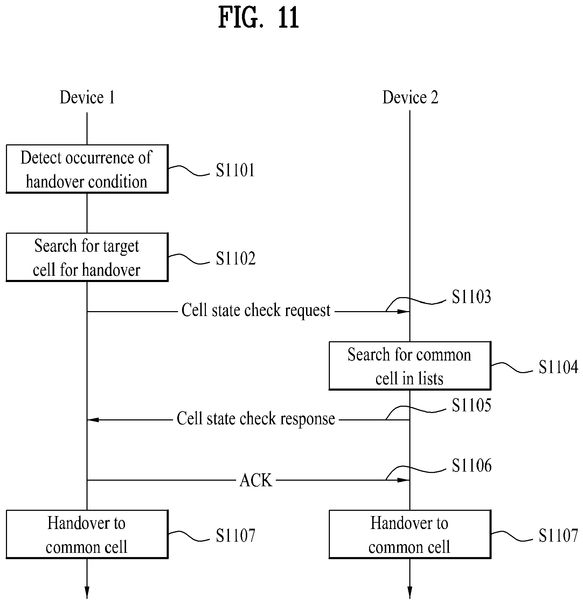

Fig. 11 illustrates an exemplary simultaneous handover operation according to another embodiment of the present disclosure.

Referring to Fig. 11, D2D devices may maintain a communication state with a BS of a serving cell during D2D direct communication in order to receive control information on a control channel from the BS. Herein, it is assumed that Device 1 detects occurrence of a handover condition described before in Clause 3.(1) (S1101).

Unlike the embodiment of the present disclosure illustrated in Fig. 10, Device 1 may search for neighbor target cells before transmitting a cell state check request message to Device 2 in the embodiment of the present disclosure illustrated in Fig. 11. For example, Device 1 may search for target cells for handover (S1102) and transmit a cell state check request message including information about detected target cells to Device 2 (S1103).

The cell state check request message may include a list of target cells detected by Device 1 and channel state information (e.g., a channel estimate or a channel measurement) between the serving cell and Device 1.

Device 2 may search for a common cell to which Device 1 and Device 2 will perform simultaneously, based on the target cell information included in the cell state check request message received from Device 1 (S1104).

In the presence of a common cell, Device 2 transmits a cell state check response message including information about the common cell to Device 1. The common cell information may include a cell ID of the common cell (S1105).

Upon receipt of the cell state check response message, Device 1 may transmit a response message to Device 2 (S1106).

Upon receipt of an ACK message, Device 2 may perform handover to the common cell together with Device 1 (S1107).

If there is no common cell in the target cell list included in the cell state check response message, to which Device 1 and Device 2 will perform handover simultaneously or if Device 2 is not placed in a handover state, Device 1 and Device 2 may perform handover to the cellular network in any of the manners illustrated in Figs. 3 to 8, instead of simultaneous handover in Fig. 11.

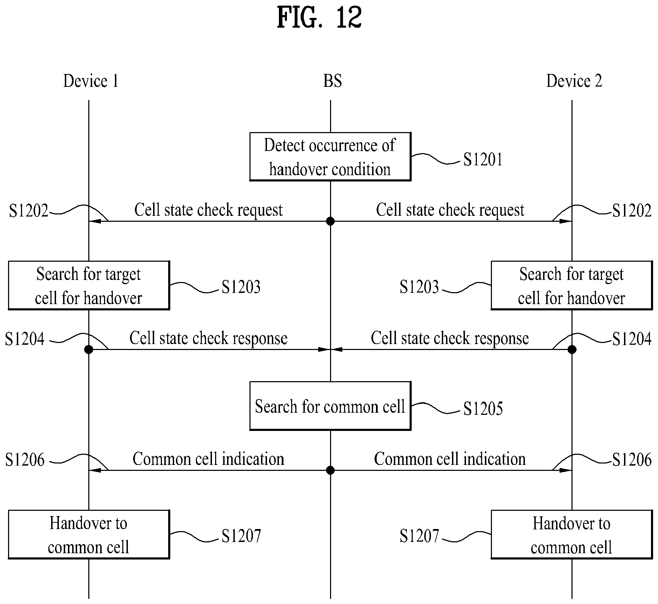

Fig. 12 illustrates an exemplary simultaneous handover operation according to another embodiment of the present disclosure.

Unlike the embodiments of the present disclosure illustrated in Figs. 10 and 11, a BS searches for a common cell and commands simultaneous handover in the embodiment of the present disclosure illustrated in Fig. 12. It is assumed in the illustrated case of Fig. 12 that a BS of a serving cell detects occurrence of a handover condition described before in Clause 3.(1). It is also assumed that the BS controls serving cells of Device 1 and Device 2 (S1201).

Thus, the BS transmits, to Device 1 and Device 2, cell state check request messages requesting Device 1 and Device 2 to check the state of a control channel between Device 1 and its serving cell and/or the state of a control channel between Device 2 and its serving cell during D2D direct communication (S1202)

Upon receipt of the cell state check request messages, Device 1 and Device 2 measure the channel states with their serving cells and search for target cells for handover (S1203).

Each of Device 1 and Device 2 transmits a cell state check response message including information about detected target cells to the BS. The target cell information may include a list of the target cells detected by the device and the channel state information (e.g. a channel estimate or a channel measurement) between the device and the BS (S1204).

The BS may search for a common cell to which Device 1 and Device 2 will perform simultaneous handover based on the target cell information included in the cell state check response messages received from Device 1 and Device 2 (S1205).

In the presence of a common cell to which Device 1 and Device 2 will perform handover simultaneously, the BS transmits a common cell indication message including information about the common cell to Device 1 and Device 2. The common cell information may include a cell ID of the common cell (S1206).

Upon receipt of the common cell indication message, Device 1 and Device 2 may perform simultaneous handover to the common cell indicated by the BS (S1207).

On the other hand, if there is no common cell in the target cell lists included in the cell state check response messages, the BS may command Device 1 and Device 2 to perform handover to a cellular network in any of the manners illustrated in Figs. 3 to 8 in Fig. 12. In this case, each of Device 1 and Device 2 performs handover to the cellular network, instead of simultaneous handover.

The devices illustrated in Fig. 2 may be used to implement the methods illustrated in Figs. 3 to 12.

Those skilled in the art will appreciate that the present invention may be carried out in other specific ways than those set forth herein without departing from the scope of the present claims. The above embodiments are therefore to be construed in all aspects as illustrative and not restrictive. The scope of the claims should be determined by the appended claims, not by the above description, and all changes coming within the scope of the appended claims are intended to be embraced therein.

### Industrial Applicability

The present invention is applicable to various wireless access systems including a 3GPP system, a 3GPP2 system, and/or an IEEE 802.xx system. Besides these wireless access systems, the embodiments of the present disclosure are applicable to all technical fields in which the wireless access systems find their applications.

## Claims

1. A method for performing simultaneous Device to Device, D2D, handover from a source cell to a target cell, in a wireless access system supporting D2D direct communication, the method being performed by a first device conducting D2D direct communication, said method comprising:
detecting occurrence of a handover;
transmitting, to a second device conducting the D2D direct communication with the first device, a cell state check request message requesting channel state information between a Base Station (150), BS, of the source cell and the second device, when the handover condition occurs;
searching for and detecting a target cell for handover by the first device;
receiving a cell state check response message including the channel state information from the second device, in response to the cell state check request message;
searching for a common cell being a target cell included commonly among target cells detected by the first device and target cells included in the channel state information;
transmitting a common cell indication message indicating simultaneous handover of the devices to the second device, wherein the common cell indication message includes information about the common cell; and
performing handover to the common cell together with the second device.

2. The method according to claim 1, wherein the handover condition is at least one of reception of two or more consecutive Negative ACKnowledgment, NACK, signals, generation of consecutive time-outs, a state of a channel for the D2D direct communication being a reference value or below, movement of one of devices conducting the D2D direct communication to another cell, a transmission power of one of the devices conducting the D2D direct communication being a threshold or above, the distance between the devices conducting the D2D direct communication being a predetermined distance or larger, a Modulation and Coding Scheme, MCS, level of one of the devices conducting the D2D direct communication being a threshold or below, channel qualities of the devices conducting the D2D direct communication being a threshold or below, and lack of radio resources to be allocated to a device conducting the D2D direct communication.

3. A method for performing simultaneous Device to Device, D2D, handover from a source cell to a target cell, in a wireless access system supporting D2D direct communication, the method being performed by a first device conducting D2D direct communication, said method comprising:
detecting occurrence of a handover condition;
searching for a target cell for handover by the first device, when the handover condition occurs;
transmitting, to a second device conducting the D2D direct communication with the first device, a cell state check request message requesting channel state information between a Base Station (150), BS, of the source cell and the second device, when the handover condition occurs, wherein the cell state check request message includes a list of detected target cells;
receiving, from the second device, a cell state check response message including information about a common cell to which the first device and the second device are to perform simultaneous handover, in response to the cell state check request message; and
performing handover to the common cell together with the second device.

4. The method according to claim 3, wherein the handover condition is at least one of reception of two or more consecutive Negative ACKnowledgment, NACK, signals, generation of consecutive time-outs, a state of a channel for the D2D direct communication being a reference value or below, movement of one of devices conducting the D2D direct communication to another cell, a transmission power of one of the devices conducting the D2D direct communication being a threshold or above, the distance between the devices conducting the D2D direct communication being a predetermined distance or larger, a Modulation and Coding Scheme, MCS, level of one of the devices conducting the D2D direct communication being a threshold or below, channel qualities of the devices conducting the D2D direct communication being a threshold or below, and lack of radio resources to be allocated to a device conducting the D2D direct communication.

5. A first device for performing simultaneous Device to Device, D2D, handover in a wireless access system supporting D2D direct communication, the first device comprising:
a Radio Frequency, RF, module (110) including a transmitter and a receiver; and
a processor (120) configured to support simultaneous D2D handover,
wherein the first device is configured to detect occurrence of a handover condition during D2D direct communication, to transmit, to a second device conducting the D2D direct communication with the first device through the RF module, a cell state check request message requesting channel state information between a Base Station, BS, of the source cell and the second device in response to occurrence of the handover condition, to search for and detect a target cell for handover by the first device, to receive a cell state check response message including the channel state information from the second device in response to the cell state check request message through the RF module, to search for a common cell being a target cell included commonly among target cells detected by the first device and target cells included in the channel state information, and to transmit a common cell indication message indicating simultaneous handover of the devices to the second device through the RF module, wherein the common cell indication message includes information about the common cell, and to perform handover to the common cell together with the second device.

6. The first device according to claim 5, wherein the handover condition is at least one of reception of two or more consecutive Negative ACKnowledgment, NACK, signals, generation of consecutive time-outs, a state of a channel for the D2D direct communication being a reference value or below, movement of one of devices conducting the D2D direct communication to another cell, a transmission power of one of the devices conducting the D2D direct communication being a threshold or above, the distance between the devices conducting the D2D direct communication being a predetermined distance or larger, a Modulation and Coding Scheme, MCS, level of one of the devices conducting the D2D direct communication being a threshold or below, channel qualities of the devices conducting the D2D direct communication being a threshold or below, and lack of radio resources to be allocated to a device conducting the D2D direct communication.

## Patentansprüche

1. Verfahren zum Ausführen von gleichzeitigem Gerät-zu-Gerät-Handover, D2D-Handover, von einer Quellzelle an eine Zielzelle in einem drahtlosen Zugangssystem, das direkte D2D-Kommunikation unterstützt, wobei das Verfahren durch ein erstes Gerät ausgeführt wird, das direkte D2D-Kommunikation durchführt, wobei das Verfahren Folgendes umfasst:
Detektieren des Eintretens eines Handovers;
Übertragen einer Zellenzustandsprüfungsanforderungsnachricht, die Kanalzustandsinformationen zwischen einer Basisstation (150), BS, der Quellzelle und einem zweiten Gerät anfordert, an das zweite Gerät, das die direkte D2D-Kommunikation mit dem ersten Gerät durchführt, wenn die Handoverbedingung eintritt;
Suchen und Detektieren einer Zielzelle für ein Handover durch das erste Gerät;
Empfangen einer Zellenzustandsprüfungsantwortnachricht, welche die Kanalzustandsinformationen einschließt, vom zweiten Gerät in Reaktion auf die Zellenzustandsprüfungsanforderungsnachricht;
Suchen einer gemeinsamen Zelle, die eine gemeinsam eingeschlossene Zielzelle ist, unter durch das erste Gerät detektierten Zielzellen und in den Kanalzustandsinformationen eingeschlossenen Zielzellen;
Übertragen einer Gemeinsame-Zelle-Anzeigenachricht, die ein gleichzeitiges Handover der Geräte anzeigt, an das zweite Gerät, wobei die Gemeinsame-Zelle-Anzeigenachricht Informationen über die gemeinsame Zelle einschließt; und
Ausführen eines Handovers an die gemeinsame Zelle zusammen mit dem zweiten Gerät.

2. Verfahren nach Anspruch 1, wobei die Handoverbedingung zumindest Folgendes ist: der Empfang von zwei oder mehr aufeinanderfolgenden negativen Bestätigungssignalen, Negative-ACKnowledgment- bzw. NACK-Signalen, die Erzeugung aufeinanderfolgender Time-Outs, dass ein Zustand eines Kanals für die direkte D2D-Kommunikation so groß wie oder kleiner als ein Referenzwert ist, die Bewegung eines der Geräte, welche die direkte D2D-Kommunikation durchführen, in eine andere Zelle, dass die Übertragungsleistung eines der Geräte, welche die direkte D2D-Kommunikation durchführen, so groß wie oder größer als ein Grenzwert ist, dass der Abstand zwischen den Geräten, welche die direkte D2D-Kommunikation durchführen, so groß wie oder größer als ein vorbestimmter Abstand ist, dass ein Modulations- und Codierungsschemaniveau, MCS-Niveau, eines der Geräte, welche die direkte D2D-Kommunikation durchführen, so groß wie oder kleiner als ein Grenzwert ist, dass Kanalqualitäten der Geräte, welche die direkte D2D-Kommunikation durchführen, so groß wie oder kleiner als ein Grenzwert sind und/oder das Fehlen von Funkressourcen, die einem Gerät, das die direkte D2D-Kommunikation durchführt, zugewiesen werden sollen.

3. Verfahren zum Ausführen von gleichzeitigem Gerät-zu-Gerät-Handover, D2D-Handover, von einer Quellzelle an eine Zielzelle in einem drahtlosen Zugangssystem, das direkte D2D-Kommunikation unterstützt, wobei das Verfahren durch ein erstes Gerät ausgeführt wird, das direkte D2D-Kommunikation durchführt, wobei das Verfahren Folgendes umfasst:
Detektieren des Eintretens einer Handoverbedingung;
Suchen einer Zielzelle für ein Handover durch das erste Gerät, wenn die Handoverbedingung eintritt;
Übertragen einer Zellenzustandsprüfungsanforderungsnachricht, die Kanalzustandsinformationen zwischen einer Basisstation (150), BS, der Quellzelle und einem zweiten Gerät anfordert, an das zweite Gerät, das die direkte D2D-Kommunikation mit dem ersten Gerät durchführt, wenn die Handoverbedingung eintritt, wobei die Zellenzustandsprüfungsanforderungsnachricht eine Liste detektierter Zielzellen einschließt;
Empfangen einer Zellenzustandsprüfungsantwortnachricht, die Informationen über eine gemeinsame Zelle, an die das erste Gerät und das zweite Gerät ein gleichzeitiges Handover ausführen sollen, einschließt, vom zweiten Gerät in Reaktion auf die Zellenzustandsprüfungsanforderungsnachricht und
Ausführen eines Handovers an die gemeinsame Zelle zusammen mit dem zweiten Gerät.

4. Verfahren nach Anspruch 3, wobei die Handoverbedingung zumindest Folgendes ist: der Empfang von zwei oder mehr aufeinanderfolgenden negativen Bestätigungssignalen, Negative-ACKnowledgment- bzw. NACK-Signalen, die Erzeugung aufeinanderfolgender Time-Outs, dass ein Zustand eines Kanals für die direkte D2D-Kommunikation so groß wie oder kleiner als ein Referenzwert ist, die Bewegung eines der Geräte, welche die direkte D2D-Kommunikation durchführen, in eine andere Zelle, dass die Übertragungsleistung eines der Geräte, welche die direkte D2D-Kommunikation durchführen, so groß wie oder größer als ein Grenzwert ist, dass der Abstand zwischen den Geräten, welche die direkte D2D-Kommunikation durchführen, so groß wie oder größer als ein vorbestimmter Abstand ist, dass ein Modulations- und Codierungsschemaniveau, MCS-Niveau, eines der Geräte, welche die direkte D2D-Kommunikation durchführen, so groß wie oder kleiner als ein Grenzwert ist, dass Kanalqualitäten der Geräte, welche die direkte D2D-Kommunikation durchführen, so groß wie oder kleiner als ein Grenzwert sind, und/oder das Fehlen von Funkressourcen, die einem Gerät, das die direkte D2D-Kommunikation durchführt, zugewiesen werden sollen.

5. Erstes Gerät zum Ausführen von gleichzeitigem Gerät-zu-Gerät-Handover, D2D-Handover, in einem drahtlosen Zugangssystem, das direkte D2D-Kommunikation unterstützt, wobei das erste Gerät Folgendes umfasst:
ein Funkfrequenzmodul (110), Radio Frequency- bzw. RF-Modul, das einen Sender und einen Empfänger einschließt; und
einen Prozessor (120), der dazu ausgelegt ist, gleichzeitiges D2D-Handover zu unterstützen,
wobei das erste Gerät dazu ausgelegt ist, das Eintreten einer Handoverbedingung während direkter D2D-Kommunikation zu detektieren, eine Zellenzustandsprüfungsanforderungsnachricht, die Kanalzustandsinformationen zwischen einer Basisstation, BS, der Quellzelle und dem zweiten Gerät anfordert, in Reaktion auf das Eintreten der Handoverbedingung an ein zweites Gerät, das die direkte D2D-Kommunikation mit dem ersten Gerät durchführt, durch das RF-Modul zu übertragen, eine Zielzelle zum Handover durch das erste Gerät zu suchen und zu detektieren, eine Zellenzustandsprüfungsantwortnachricht, die Kanalzustandsinformationen einschließt, vom zweiten Gerät in Reaktion die Zellenzustandsprüfungsanforderungsnachricht durch das RF-Modul zu empfangen, eine gemeinsame Zelle, die eine gemeinsam eingeschlossene Zielzelle ist, unter durch das erste Gerät detektierten Zielzellen und in die Kanalzustandsinformationen eingeschlossenen Zielzellen zu suchen und eine Gemeinsame-Zelle-Anzeigenachricht, die ein gleichzeitiges Handover der Geräte anzeigt, durch das RF-Modul an das zweite Gerät zu übertragen, wobei die Gemeinsame-Zelle-Anzeigenachricht Informationen über die gemeinsame Zelle einschließt, und ein Handover an die gemeinsame Zelle zusammen mit dem zweiten Gerät auszuführen.

6. Erstes Gerät nach Anspruch 5, wobei die Handoverbedingung zumindest eine der Folgenden ist: der Empfang von zwei oder mehr aufeinanderfolgenden negativen Bestätigungssignalen, Negative-ACKnowledgment- bzw. NACK-Signalen, die Erzeugung aufeinanderfolgender Time-Outs, dass ein Zustand eines Kanals für die direkte D2D-Kommunikation so groß wie oder kleiner als ein Referenzwert ist, die Bewegung eines der Geräte, welche die direkte D2D-Kommunikation durchführen, in eine andere Zelle, dass eine Übertragungsleistung eines der Geräte, welche die direkte D2D-Kommunikation durchführen, so groß wie oder größer als ein Grenzwert ist, dass der Abstand zwischen den Geräten, welche die direkte D2D-Kommunikation durchführen, so groß wie oder größer als ein vorbestimmter Abstand ist, dass ein Modulations- und Codierungsschemaniveau, MCS-Niveau, eines der Geräte, welche die direkte D2D-Kommunikation durchführen, so groß wie oder kleiner als ein Grenzwert ist, dass Kanalqualitäten der Geräte, welche die direkte D2D-Kommunikation durchführen, so groß wie oder kleiner als ein Grenzwert sind, und/oder das Fehlen von Funkressourcen, die einem Gerät, das die direkte D2D-Kommunikation durchführt, zugewiesen werden sollten.

## Revendications

1. Procédé pour réaliser un transfert intercellulaire simultané de dispositif à dispositif, D2D, d'une cellule source à une cellule cible, dans un système d'accès sans fil prenant en charge une communication directe D2D, le procédé étant réalisé par un premier dispositif menant la communication directe D2D, ledit procédé comprenant :
la détection de la survenance d'un transfert intercellulaire ;
la transmission, à un second dispositif menant la communication directe D2D avec le premier dispositif, d'un message de demande de vérification d'état de cellule demandant des informations d'état de canal entre une station de base (150), BS, de la cellule source et le second dispositif, lorsque la condition de transfert intercellulaire survient ;
la recherche et la détection d'une cellule cible pour un transfert intercellulaire par le premier dispositif ;
la réception d'un message de réponse de vérification d'état de cellule incluant les informations d'état de canal en provenance du second dispositif, en réponse au message de demande de vérification d'état de cellule ;
la recherche d'une cellule commune étant une cellule cible incluse en commun parmi des cellules cibles détectées par le premier dispositif et des cellules cibles incluses dans les informations d'état de canal ;
la transmission d'un message d'indication de cellule commune indiquant un transfert intercellulaire simultané des dispositifs vers le second dispositif, dans lequel le message d'indication de cellule commune inclut des informations liées à la cellule commune ; et
la réalisation d'un transfert intercellulaire vers la cellule commune conjointement avec le second dispositif.

2. Procédé selon la revendication 1, dans lequel la condition de transfert intercellulaire est au moins un d'une réception de deux ou plus signaux consécutifs d'acquittement négatif, NACK, une génération de délais d'attente consécutifs, d'un état d'un canal pour la communication directe D2D étant égal ou inférieur à une valeur de référence, d'un mouvement d'un des dispositifs menant la communication directe D2D vers une autre cellule, d'une puissance de transmission d'un des dispositifs menant la communication directe D2D étant égale ou supérieure à un seuil, de la distance entre les dispositifs menant la communication directe D2D étant égale ou plus grande qu'une distance prédéterminée, d'un niveau de schéma de modulation et de codage, MCS, d'un des dispositifs menant la communication directe D2D étant égale ou inférieure à un seuil, de qualités de canaux des dispositifs menant la communication directe de D2D étant égales ou inférieures à un seuil, et d'un manque de ressources radio à attribuer à un dispositif menant la communication directe D2D.

3. Procédé pour réaliser un transfert intercellulaire simultané de dispositif à dispositif, D2D, d'une cellule source à une cellule cible, dans un système d'accès sans fil prenant en charge une communication directe D2D, le procédé étant réalisé par un premier dispositif menant la communication directe D2D, ledit procédé comprenant :
la détection de la survenance d'une condition de transfert intercellulaire ;
la recherche d'une cellule cible pour un transfert intercellulaire par le premier dispositif, lorsque la condition de transfert intercellulaire survient ;
la transmission, à un second dispositif menant la communication directe D2D avec le premier dispositif, d'un message de demande de vérification d'état de cellule demandant des informations d'état de canal entre une station de base (150), BS, de la cellule source et le second dispositif, lorsque la condition de transfert intercellulaire survient, dans lequel le message de demande de vérification d'état de cellule inclut une liste de cellules cibles détectées ;
la réception, depuis le second dispositif, d'un message de réponse de vérification d'état de cellule incluant des informations liées à une cellule commune vers laquelle le premier dispositif et le second dispositif doivent réaliser le transfert intercellulaire simultané, en réponse au message de demande de vérification d'état de cellule ; et
la réalisation d'un transfert intercellulaire vers la cellule commune conjointement avec le second dispositif.

4. Procédé selon la revendication 3, dans lequel la condition de transfert intercellulaire est au moins un d'une réception de deux ou plus signaux consécutifs acquittement négatif, NACK, d'une génération de délais d'attente consécutifs, d'un état d'un canal pour la communication directe D2D étant égal ou inférieur à une valeur de référence, d'un mouvement d'un des dispositifs menant la communication directe D2D vers une autre cellule, d'une puissance de transmission d'un des dispositifs menant la communication directe D2D étant égale ou supérieure à un seuil, de la distance entre les dispositifs menant la communication directe D2D étant égale ou plus grande qu'une distance prédéterminée, d'un niveau de schéma de modulation et de codage, MCS, d'un des dispositifs menant la communication directe D2D étant égale ou inférieure à un seuil, de qualités de canaux des dispositifs menant la communication directe D2D étant égales ou inférieures à un seuil, et d'un manque de ressources radio à attribuer à un dispositif menant la communication directe de dispositif à dispositif.

5. Premier dispositif pour réaliser un transfert intercellulaire simultané de dispositif à dispositif, D2D, dans un système d'accès sans fil prenant en charge une communication directe D2D, le premier dispositif comprenant :
un module radiofréquence, RF, (110) incluant un émetteur et un récepteur ; et
un processeur (120) configuré pour prendre en charge un transfert intercellulaire simultané D2D,
dans lequel le premier dispositif est configuré pour détecter la survenance d'une condition de transfert intercellulaire durant une communication directe D2D, pour transmettre, à un second dispositif menant la communication directe D2D avec le premier dispositif par le biais du module RF, un message de demande de vérification d'état de cellule demandant des informations d'état de canal entre une station de base, BS, de la cellule source et le second dispositif en réponse à la survenance de la survenance de la condition de transfert intercellulaire pour rechercher et détecter une cellule cible pour un transfert intercellulaire par le premier dispositif, pour recevoir un message de réponse de vérification d'état de cellule incluant les informations d'état de canal en provenance du second dispositif en réponse au message de demande de vérification d'état de cellule par le biais du module RF, pour rechercher une cellule commune étant une cellule cible incluse en commun parmi des cellules cibles détectées par le premier dispositif et des cellules cibles incluses dans les informations d'état de canal, et pour transmettre un message d'indication de cellule commune, indiquant un transfert intercellulaire simultané des dispositifs, au second dispositif par le biais du module RF, dans lequel le message d'indication de cellule commune inclut des informations liées à la cellule commune, et pour réaliser un transfert intercellulaire vers la cellule commune conjointement avec le second dispositif.

6. Premier dispositif selon la revendication 5, dans lequel la condition de transfert intercellulaire est au moins un d'une réception de deux ou plus signaux consécutifs d'acquittement négatif, NACK, d'une génération de délais d'attente consécutifs, d'un état d'un canal pour la communication directe D2D étant égal ou inférieur à une valeur de référence, d'un mouvement d'un des dispositifs menant la communication directe D2D vers une autre cellule, d'une puissance de transmission d'un des dispositifs menant la communication directe D2D étant égale ou supérieure à un seuil, de la distance entre les dispositifs menant la communication directe D2D étant égale ou plus grande qu'une distance prédéterminée, d'un niveau de schéma de modulation et de codage, MCS, d'un des dispositifs menant la communication directe D2D étant égale ou inférieure à un seuil, de qualités de canaux des dispositifs menant la communication directe D2D étant égales ou inférieures à un seuil, et d'un manque de ressources radio à attribuer à un dispositif menant la communication directe D2D.
